# EUROPÄISCHE PATENTSCHRIFT

(11) **EP 1 498 204 B1**
(45) Veröffentlichungstag und Bekanntmachung des Hinweises auf die Patenterteilung: **12.03.2008**
(21) Anmeldenummer: 04013233.4
(22) Anmeldetag: 04.06.2004
(51) Int. Cl.: B23D 15/14

(54) **Werkzeuganordnung mit einem ersten sowie einem zweiten Betriebsmittelkreislauf**
Tool assembly comprising a first and a second circuit for the actuating means
Outil ayant un premier ainsi qu'un deuxième circuit pour les moyens de mise en marche

(30) Priorität: 17.07.2003 DE 10332778
(43) Veröffentlichungstag der Anmeldung: 19.01.2005
(73) Patentinhaber: Lukas Hydraulik GmbH, 91058 Erlangen (DE)
(72) Erfinder: Baumüller, Klaus, 91056 Erlangen (DE); Zeitler, Otto, 91096 Möhrendorf (DE); Lasaroff, Christoff, 91074 Herzogenaurach (DE); Lindner, Dietmar, 95488 Eckersdorf (DE)
(74) Vertreter: Stippl, Hubert

(56) Entgegenhaltungen:
- EP-A- 0 600 336
- DE-T2- 69 221 221
- GB-A- 2 018 365
- GB-A- 2 093 533
- US-B1- 6 250 199

## Beschreibung

Die vorliegende Erfindung betrifft eine Werkzeuganordnung mit einer Werkzeugeinheit, z. B. einem Schneidegerät, einem Spreizer, einer Quetschvorrichtung oder dergleichen, einem Steuer- und/oder Umschaltelement, einem Antrieb sowie einem ersten Betriebsmittelkreislauf.

Es sind Werkzeuge wie z. B. Schneidwerkzeuge, Quetschvorrichtungen und dergleichen bekannt, welche große Kräfte übertragen müssen. Solche Werkzeuge sind daher häufig mit einem hydraulischen oder pneumatischen Antrieb ausgestattet, welcher z. B. eine Öffnung- und Schließbewegung eines Spreizers oder einer Schervorrichtung bewirkt.

Ein derartiges Werkzeug geht z. B. aus der DE 692 21 221 T2 hervor, wobei das Werkzeug einen hydraulischen Zylinder aufweist, dessen Hubstange das eigentliche Werkzeug betätigt, das aus zwei Schneiden oder Armen gebildet ist. Der hydraulische Antrieb wird in diesem speziellen Fall mittels eines komprimierbaren Fluids betrieben.

Bei den Hydranlikflüssigkeiten handelt es sich meist um inkompressible Öle wegen der korrosiven Eigenschaften des Wassers. Es kann jedoch der Fall auftreten, dass unter Wasser eine Verkleinerung oder Bearbeitung von diversen Teilen stattfinden muss. So ist es z. B. in den Kernkraftwerken oder -reaktoren erforderlich, unter Wasser diverse Teile zu zerkleinern, da der Raum für die Lagerung von verstrahltem Material möglichst klein zu halten ist. Bei einem Leck im Werkzeug muss das gesamte Wasser, bei welchem es sich insbesondere um entionisiertes Wasser (Deionat) handelt, gereinigt werden, was mit hohen Kosten verbunden ist.

Aus EP 0 600 336 A2 ist eine Werkzeuganordnung mit einer Werkzeugeinheit offenbart, bei welcher ein Antrieb in Form von Druckluft, ein Steuerelement sowie ein erster und ein zweiter Betriebsmittelkreislauf vorgesehen ist. Der zweite Betriebsmittelkreislauf steht über einem Druckmedienwandler in Form eines sich frei bewegenden Kolbens mit dem ersten Betriebsmittelkreislauf in Wirkverbindung.

Die GB 2 018 365 A offenbart eine Werkzeuganordnung mit einer Pumpe als Antrieb sowie Werkzeugeinheiten, die mittels Flüssigkeit reversibel betätigbar sind. Ferner ist ein erster und zweiter Betriebsmittelkreislauf vorgesehen, welche über einen Druckmedienwandler in Wirkverbindung stehen. Dem Druckmedienwandler ist ein Steuerelement vorgeschaltet

Es ist die Aufgabe der vorliegenden Erfindung, ein Werkzeug zu schaffen, mit welchem Tätigkeiten unter Wasser durchgeführt werden können, wobei eine gute Überwachung der Tätigkeit von außen möglich ist.

Diese Aufgabe wird durch die gesamte Lehre des Patentanspruchs 1 gelöst. Vorteilhafte Weiterbildungen der Erfindung ergeben sich aus den Unteransprüchen 2-17. Eine erfindungsgemäße Verwendungsmöglichkeit geht aus Patentanspruch 18 hervor.

Erfindungsgemäß umfasst die Werkzeuganordnung einen Druckmedienwandler mit zwei Zylindern, in denen jeweils ein Freikolben, der die beiden Betriebsmittel voneinander trennt, um einen Hubweg hin- und herbewegbar ist, und für mindestens einen Freikolben ein Kolbenstandsanzeiger vorgesehen ist. Indem zwei Betriebsmittelkreisläufe bzw. zwei hydraulische oder pneumatische Einheiten vorgesehen sind, können die jeweiligen Betriebsmittelkreisläufe mit einem jeweils unterschiedlichen Betriebsmittel betrieben werden. Diese Aufteilung des Betriebsmittelkreislaufs führt zu vorteilhaften Einsatzmöglichkeiten der Werkzeuganordnung. Mit Vorteil kann der erste Betriebsmittelkreislauf mit dem Antrieb, insbesondere einer Pumpe, und der zweite Betriebsmittelkreislauf mit der Werkzeugeinheit in Verbindung stehen. Bei der Werkzeugeinheit kann es sich z. B. um ein Schneidegerät, einen Spreizer, einen Hydraulikzylinder (z. B. für eine Presse) oder dergleichen handeln. Es ist dadurch mit Vorteil möglich, dass mit dem Werkzeug in einem Medium gearbeitet werden kann, welches dem Betriebsmittel entspricht, das für den zweiten Betriebsmittelkreislauf bestimmt ist. Tritt eine Leckage in der Werkzeugeinheit auf, muss nicht das gesamte Medium, in dem gearbeitet wird, gereinigt werden, da das Betriebsmittel mit dem Medium übereinstimmt. Die Trennung der beiden Betriebsmittelkreisläufe hat außerdem den Vorteil, dass keine aufwändigen Dichtungsmaßnahmen an der Werkzeugeinheit vorgesehen werden müssen, da eine Leckage keine Verunreinigung des Mediums, in dem gearbeitet wird, mit sich bringt.

Die hydraulische Energie des ersten Betriebsmittelkreislaufes wird mittels des Druckmedienwandler direkt auf den zweiten Betriebsmittelkreislauf übertragen. Um sicherzustellen, dass der jeweilige Freikolben nicht in seine Endlage kommt bzw. der Arbeitshub beobachtet und kontrolliert werden kann, ist für mindestens einen Freikolben, vorzugsweise für jeden Freikolben, ein Kolbenstandsanzeiger vorgesehen. Ein solcher Kolbenstandsanzeiger kann mit dem jeweiligen Freikolben, insbesondere mit dessen Stirnseite, in Verbindung stehen und nach außen aus dem Zylinder, insbesondere aus dessen Stirnseite, herausragen. Die Hubbewegung des jeweiligen Freikolbens kann damit in einfacher Weise von außen überwacht werden.

Der erste Betriebsmittelkreislauf kann also mit einem ersten Betriebsmittel und der zweite Betriebsmittelkreislauf mit einem zweiten Betriebsmittel betrieben werden, wobei sich das erste und das zweite Betriebsmittel voneinander unterscheiden. Demnach kann für das Werkzeug und dem Antrieb jeweils das optimale Betriebsmittel ausgewählt werden.

Insbesondere sind das erste und das zweite Betriebsmittel jeweils Flüssigkeiten, mit welchen ein hydraulischer Antrieb und eine damit verbundene große Kraftübertragung durchführbar ist.

Bei dem zweiten Betriebsmittel kann es sich um Wasser, insbesondere um entionisiertes Wasser (Deionat), handeln. Somit kann das Werkzeug in Kernkraftwerken oder Kernreaktoren eingesetzt werden, wobei unter Wasser diverse Teile bearbeitet, z. B. zerkleinert oder zerschnitten werden können. Eine Leckage im Werkzeug führt nicht zu einer Verunreinigung des Deionates und es fallen demnach auch keine aufwändigen und kostenintensiven Reinigungsarbeitens des Deionates an.

Da das Betreiben der Pumpe mit Wasser oder Deionat aufgrund der Korrosionseigenschaft des Wassers, der Kavitationsgefahr sowie der Dichtspalte am Kolbenaggregat sehr schwierig ist, kann der Antrieb bzw. die Pumpe mit einer Hydraulikflüssigkeit bzw. einem Hydrauliköl betrieben werden. Insbesondere kann es sich dabei um ein herkömmliches Hydraulikmedium, z. B. Hydrauliköl oder HFC-Fluid, handeln. Eine Vermischung der beiden Flüssigkeiten kann durch den dazwischengeschalteten Druckmedienwandler nicht stattfinden.

Zweckmäßigerweise sind die beiden Zylinder parallel zueinander angeordnet, womit eine kleine Baugröße des Druckmedienwandlers realisiert wird.

Um ein Vermischen der beiden Betriebsmittel auszuschließen, kann der jeweilige Freikolben mindestens zwei voneinander beabstandete Dichtelemente aufweisen, die ein Durchdringen des Betriebsmittels an der Grenzfläche zwischen Freikolben und Zylinder verhindern. Zweckmäßigerweise kann mindestens ein Dichtelement im jeweiligen Endbereich des Freikolbens angeordnet sein, um ein Durchdringen des ersten als auch des zweiten Betriebsmittels von beiden Seiten zu vermeiden.

Mit Vorteil können die Dichtelemente so angeordnet sein, dass das Dichtelement auf der Seite des ersten Betriebsmittelkreislaufes nicht den gleichen Weg bzw. die gleiche Fläche wie das Dichtelement auf der Seite des zweiten Betriebsmittelkreislaufes überstreicht, um ein Vermischen der verschiedenen Flüssigkeiten zu verhindern. Dabei können natürlich auf jeder Seite des Freikolbens mehr als ein Dichtelement vorgesehen sein.

Ferner kann der jeweilige Freikolben mindestens eine Aussparung aufweisen, die zwischen den Dichtelementen angeordnet ist. Diese Aussparung stellt einen Sammelraum für die Betriebsmittel dar, die trotz der Dichtungen durchdringen.

Die Aussparung ist zum Zylindermantel hin offen und nimmt so die im Grenzbereich zwischen Freikolben und Zylinder durchtretenden Betriebsmittel auf. Die Aussparung kann sich zweckmäßigerweise über dem gesamten Umfang des Freikolbens erstrecken, womit gewährleistet ist, dass alle Leckagen in den Sammelraum eintreten. Die Aussparung kann konkav ausgebildet sein, um Spannungsspitzen bei der Bewegung des Freikolbens zu vermeiden.

Die Zylinder können jeweils mindestens einen Auslaß aufweisen, damit Leckagen bzw. sog. Schleppöl, das zwischen Freikolben und Zylinderwand hindurchdringt, nach außen abfließen kann. Demnach befindet sich der Auslaß vorzugsweise im Bewegungsbereich des Freikolbens. Sind an den jeweiligen Endbereichen des Freikolbens Dichtungen vorgesehen - wie oben beschrieben - so ist der Auslaß zweckmäßigerweise im Bewegungsbereich des Freikolbens zwischen den beiden Dichtungen angeordnet. Der Auslaß ist nicht nur dafür vorgesehen, dass Leckagen oder Schleppöl abfließen können, sondern dienen auch der Belüftung des Zylinderinnenraums, so dass z. B. darin angesammeltes Wasser verdunsten kann.

Mit Vorteil kann der Aussparung mindestens ein Auslaß im Zylinder zugeordnet sein. Der Auslaß sorgt dafür, dass die in der Aussparung angesammelten Leckagen nach außen abfließen können.

Vorteilhafterweise steht die Aussparung während der Hin- und Herbewegung des Freikolbens mit dem Auslaß stets in Verbindung, um bei jeder Stellung des Freikolbens ein Ablaufen der Leckagen zu gewährleisten.

Der Antrieb selbst kann über eine Fernbedienung betätigbar bzw. steuerbar sein, was z. B. beim Einsatz der Werkzeuganordnung in einem Kernreaktor von Vorteil ist.

Die Leitungen zwischen dem Druckmedienwandler und dem Antrieb einerseits sowie dem Druckmedienwandler und dem Werkzeug andererseits können je nach Bedarf eine unterschiedliche Länge haben. Dabei ist es von besonderem Vorteil, dass die Leitungen zwischen dem Druckmedienwandler und dem Werkzeug sehr lang sein können, um mit dem Werkzeug an den Einsatzbereich, z. B. unter Wasser zu gelangen, wobei gleichzeitig der Druckmedienwandler sowie der Antrieb außerhalb des Wassers bleiben können.

Erfindungsgemäß wird die oben beschriebene Werkzeuganordnung für Tätigkeiten, z. B. Zerkleinerungen, Zerschneidungen, Aufräumarbeiten oder dergleichen unter Wasser, z. B. in einem Kernreaktor, verwendet. So können z. B. Regelstäbe unter Wasser zerkleinert werden, ohne dass eine Verunreinigung des Wassers mit Hydraulikflüssigkeit zu befürchten ist.

Die Erfindung ist anhand von vorteilhaften Ausführungsbeispielen in den Zeichnungsfiguren näher erläutert. Diese zeigen:

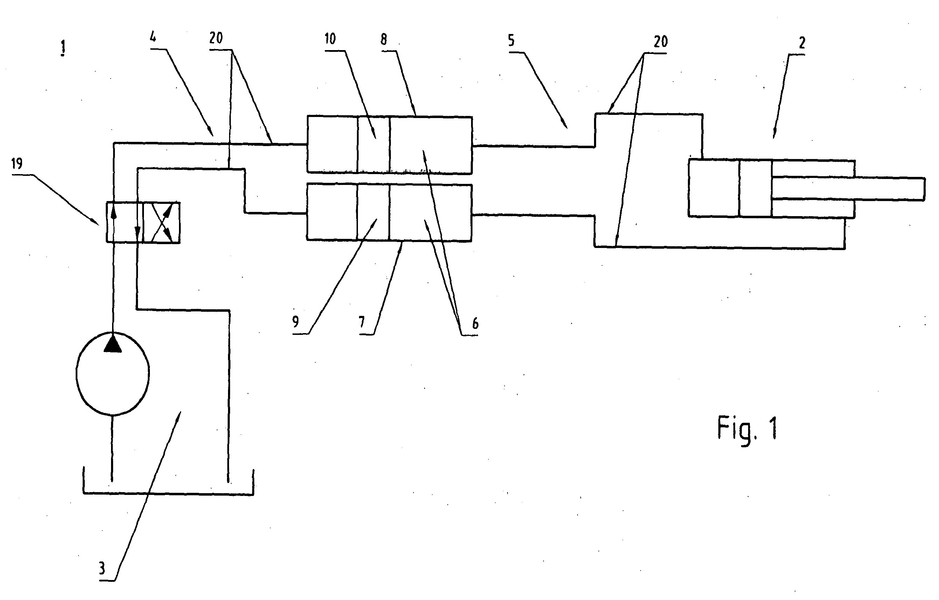

- Fig. 1: ein Prinzipschaltbild einer Werkzeuganordnung;
- Fig. 2: eine Schnittdarstellung einer Werkzeuganordnung mit einem Schneidegerät;
- Fig. 3: eine Schnittdarstellung eines Spreizers sowie
- Fig. 4: eine Schnittdarstellung eines Hydraulikzylinders.

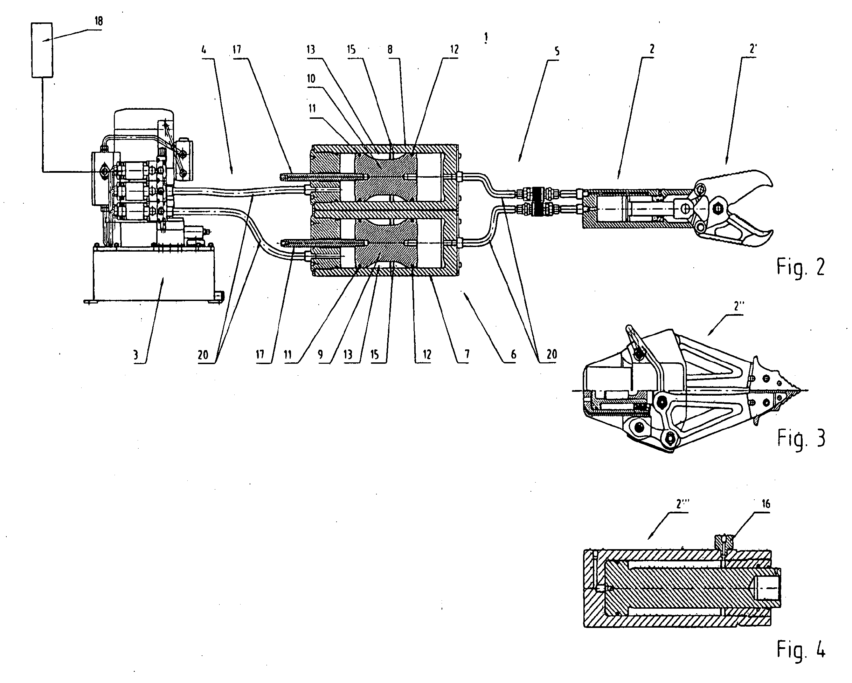

Bezugsziffer 1 bezeichnet die Werkzeuganordnung in ihrer Gesamtheit. Die Werkzeuganordnung 1 umfasst eine Werkzeugeinheit 2 (bei Fig. 2 ist dies ein Schneidegerät 2'), einen Antrieb 3, ein Steuer- und Umschaltventil 19 sowie einen ersten Betriebsmittelkreislauf 4. Außerdem ist ein zweiter Betriebsmittelkreislauf 5 vorgesehen, der über einen Druckmedienwandler 6 mit dem ersten Betriebsmittelkreislauf 4 in Verbindung steht. Insgesamt ergibt damit die Werkzeuganordnung 1 einen geschlossenen Kreis. Die Aufteilung des hydraulischen Kreislaufs in zwei Betriebsmittelkreisläufe führt zu besonders vorteilhaften Anwendungsmöglichkeiten des Werkzeuges 2, welches nicht direkt abhängig von dem Antrieb und dem damit verbundenen Betriebsmittelkreislauf sowie dem dafür benötigten Betriebsmittel ist.

In den Figuren 3 und 4 sind Werkzeuge 2 dargestellt, die alternativ an die Werkzeuganordnung angeschlossen werden können. Demnach kann statt des Schneidegeräts 2' entweder ein Spreizer 2 (Fig. 3) oder ein Hydraulikzylinder 2'" z.B. für eine Presse (Fig. 4) in die Werkzeuganordnung integriert sein.

Der erste Betriebsmittelkreislauf 4 steht mit dem Antrieb 3, der zweite Betriebsmittelkreislauf 5 mit der Werkzeugeinheit 2 in Verbindung. Der erste Betriebsmittelkreislauf 4 wird mit einem ersten Betriebsmittel und der zweite Betriebsmittelkreislauf 5 mit einem zweiten Betriebsmittel betrieben, wobei sich das erste und das zweite Betriebsmittel voneinander unterscheiden. Bei dem zweiten Betriebsmittel, welches über den zweiten Betriebsmittelkreislauf 5 direkt mit der Werkzeugeinheit 2 in Verbindung steht, handelt es sich um Wasser, insbesondere entionisiertes Wasser, sog. Deionat. Das erste Betriebsmittel ist Hydrauliköl oder ein HFC-Fluid oder dergleichen und reduziert bzw. verhindert auf der Seite des Antriebs 3 eine Korrosion sowie Kavitation. Indem das Werkzeug bzw. der zweite Betriebsmittelkreislauf 5 nur mit Wasser betrieben wird, kann die Werkzeugeinheit 2 besonders vorteilhaft unter Wasser eingesetzt werden, ohne dass die Gefahr besteht, dass das Medium Wasser bzw. das Deionat durch Leckagen des Betriebsmittels verunreinigt wird.

Eine besonders vorteilhafte Anwendung der Werkzeuganordnung ist der Einsatz in Kernkraftwerken bzw. Kernreaktoren, um das in einem Deionat gelagerte, verstrahlte Material zu zerkleinern. Dies ist notwendig, da der zur Verfügung stehende Raum für die Lagerung von verstrahltem Material möglichst klein zu halten ist.

Der Druckmedienwandler 6 ist eine Trennkolbenanordnung, deren Einzelheiten insbesondere in Fig. 2 deutlich erkennbar sind. Der Druckmedienwandler 6 weist zwei Zylinder 7, 8 auf, in denen jeweils ein Freikolben 9, 10 zwischen den beiden Betriebsmittelkreisläufen 4, 5 angeordnet ist und die beiden Betriebsmittel voneinander trennt und um einen Hubweg hin- und herbewegbar ist. Dieser relativ einfache Aufbau sorgt für eine direkte und mit nur wenigen Verlusten verbundene Übertragung der hydraulischen Kräfte von dem einen auf den anderen Betriebsmittelkreislauf.

Um den Druckmedienwandler 5 möglichst kompakt zu gestalten, sind die beiden Zylinder 7, 8 parallel zueinander angeordnet.

Der jeweilige Freikolben 9, 10 weist zwei voneinander beabstandete Dichtelemente 11, 12 auf, welche ein Durchdringen des flüssigen Betriebsmittels von dem einen in den anderen Betriebsmittelkreislauf verhindern sollen. Die Dichtelemente 11, 12 sind jeweils im Endbereich, also nahe der Stirnseite des jeweiligen Freikolbens 9, 10 angeordnet. Die Dichtungen 11 überstreichen dabei nicht die gleiche Fläche wie die Dichtungen 12, womit ein Vermischen der unterschiedlichen Flüssigkeiten der beiden Betriebsmittelkreisläufe 4, 5 verhindert wird. Außerdem weist der jeweilige Freikolben 9, 10 eine Aussparung 13 auf, die zwischen den Dichtelementen 11, 12 angeordnet ist. Diese Aussparung 13 dient als Sammelbecken für Leckagen, also für das jeweilige Betriebsmittel, das zwischen dem Freikolben 9 bzw. 10 und dem Zylinder 7 bzw. 8 sowie am jeweiligen Dichtelement 11, 12 hindurchdringt. Die Aussparung 13 erstreckt sich über den gesamten Umfang des Freikolbens 9, 10, um sämtliche Leckagen zuverlässig aufzufangen und um den Freikolben 9, 10 symmetrisch zu gestalten.

Die Aussparung 13 ist konkav ausgebildet, was sowohl Festigkeitsvorteile als auch Raumvorteile hat.

Damit die in der Aussparung 13 gesammelten Leckagen abfließen können, sind Auslässe 15 im jeweiligen Zylinder 7 bzw. 8 angeordnet bzw. der jeweiligen Aussparung 13 zugeordnet. Dabei ist sichergestellt, dass die Aussparung 13 während der Hin- und Herbewegung der Freikolben 9, 10 mit den Auslässen 15 in Verbindung steht, so dass bei jeder Stellung der Freikolben 9, 10 ein Abfließen der Leckagen gewährleistet ist. Es ist natürlich auch möglich, dass die Zylinder 7, 8 lediglich Auslässe 15 ohne dazugehörige Aussparungen aufweisen. Auch in diesen Fällen befindet sich der Auslaß 15 im Bewegungsbereich des Freikolbens 7,8 und zweckmäßigerweise zwischen den beiden Dichtungen 11, 12.

Um die Positionierung bzw. die Endstellung des jeweiligen Freikolbens 9, 10 kontrollieren zu können, weist der Druckmedienwandler 6 einen Kolbenstandsanzeiger 17 auf. Im vorliegenden Beispiel besteht dieser aus Stiften, die mit dem Stirnende des jeweiligen Freikolbens 9,10 verbunden sind und nach außen aus dem jeweiligen Zylinder 7, 8 hervorstehen und sich mit dem Freikolben 9, 10 entsprechend mitbewegen.

Der Antrieb 3 ist über eine Fernbedienung 18 betätigbar bzw. steuerbar, was insbesondere bei der Verwendung der Werkzeuganordnung in einem Kernkraftwerk bzw. Kernreaktor von Vorteil ist.

Bezugsziffer 20 bezeichnet ein Sicherheitsventil an dem Hydraulikzylinder 2''' gemäß Fig. 4. Ein solches Sicherheitsventil kann natürlich auch bei den anderen Werkzeugen vorgesehen sein.

Die Leitungen 20 zwischen dem Druckmedienwandler 6 und dem Antrieb 3 einerseits bzw. der Werkzeugeinheit 2 andererseits können je nach Bedarf unterschiedlich lang sein. Insbesondere sind die Leitungen 20 zwischen der Werkzeugeinheit 2 und dem Druckmedienwandler 6 sehr lang, damit die Werkzeugeinheit 2 unter Wasser flexibel eingesetzt werden kann, wobei gleichzeitig der Druckmedienwandler 6 und der Antrieb 3 außerhalb des Wassers positioniert sind.

## Patentansprüche

1. Werkzeuganordnung mit einer Werkzeugeinheit (2), z. B. einem Schneidegerät (2'), einem Spreizer (2"), einer Quetschvorrichtung oder dergleichen, einem Antrieb (3), einem Steuer- und/oder Umschaltelement sowie einem ersten Betriebsmittelkreislauf (4), wobei ein zweiter Betriebsmittelkreislauf (5) vorgesehen ist, der über einen Druckmedienwandler (6) mit dem ersten Betriebsmittelkreislauf (7) in Wirkverbindung steht,
**dadurch gekennzeichnet, dass**
der Druckmedienwandler (6) zwei Zylinder (7, 8) aufweist, in denen jeweils ein Freikolben (9, 10), der die beiden Betriebsmittel voneinander trennt, um einen Hubweg hin- und herbewegbar ist, und für mindestens einen Freikolben (9, 10) ein Kolbenstandsanzeiger (17) vorgesehen ist.

2. Werkzeuganordnung nach Anspruch 1,
**dadurch gekennzeichnet, dass**
der erste Betriebsmittelkreislauf (4) mit dem Antrieb (3) und der zweite Betriebsmittelkreislauf (5) mit der Werkzeugeinheit (2) in Verbindung steht.

3. Werkzeuganordnung nach einem der Ansprüche 1 oder 2,
**dadurch gekennzeichnet, dass**
der erste Betriebsmittelkreislauf (4) mit einem ersten Betriebsmittel und der zweite Betriebsmittelkreislauf (5) mit einem zweiten Betriebsmittel betrieben wird, wobei sich das erste und das zweite Betriebsmittel voneinander unterscheiden.

4. Werkzeuganordnung nach Anspruch 3,
**dadurch gekennzeichnet, dass**
das erste und das zweite Betriebsmittel jeweils Flüssigkeiten sind.

5. Werkzeuganordnung nach einem der vorhergehenden Ansprüche,
**dadurch gekennzeichnet, dass**
das zweite Betriebsmittel Wasser, insbesondere entionisiertes Wasser (Deionat) ist.

6. Werkzeuganordnung nach einem der vorhergehenden Ansprüche,
**dadurch gekennzeichnet, dass**
das erste Betriebsmittel ein herkömmliches Hydraulikmedium, insbesondere Hydrauliköl oder HFC-Fluid, ist.

7. Werkzeuganordnung nach einem der vorhergehenden Ansprüche,
**dadurch gekennzeichnet, dass**
die beiden Zylinder (7, 8) parallel zueinander angeordnet sind.

8. Werkzeuganordnung nach einem der vorhergehenden Ansprüche,
**dadurch gekennzeichnet, dass**
der jeweilige Freikolben (9, 10) mindestens zwei voneinander beabstandete Dichtelemente (11, 12) aufweist.

9. Werkzeuganordnung nach Anspruch 8,
**dadurch gekennzeichnet, dass**
mindestens ein Dichtelement (11, 12) jeweils im Endbereich des Freikolbens (9 bzw. 10) angeordnet ist.

10. Werkzeuganordnung nach einem der vorhergehenden Ansprüche,
**dadurch gekennzeichnet, dass**
die Freikolben (9, 10) jeweils mindestens eine Aussparung (13) aufweisen, die zwischen den Dichtelementen (11, 12) angeordnet ist.

11. Werkzeuganordnung nach Anspruch 10,
**dadurch gekennzeichnet, dass**
die Aussparung (13) zum Zylindermantel (14) hin offen ist.

12. Werkzeuganordnung nach einem der Ansprüche 10 oder 11,
**dadurch gekennzeichnet, dass**
die Aussparung (13) sich über dem gesamten Umfang des jeweiligen Freikolbens (9, 10) erstreckt.

13. Werkzeuganordnung nach einem der Ansprüche 10 bis 12,
**dadurch gekennzeichnet, dass**
die Aussparung (13) konkav ausgebildet ist.

14. Werkzeuganordnung nach einem der vorhergehenden Ansprüche,
**dadurch gekennzeichnet, dass**
die Zylinder (7, 8) jeweils mindestens einen Auslaß (15) aufweisen.

15. Werkzeuganordnung nach einem der Ansprüche 10 bis 14,
**dadurch gekennzeichnet, dass**
der Aussparung (13) mindestens ein Auslaß (15) im Zylinder (7 bzw. 8) zugeordnet ist.

16. Werkzeuganordnung nach einem der Ansprüche 10 bis 15,
**dadurch gekennzeichnet, dass**
die Aussparung (13) während der Hin- und Herbewegung des Freikolbens (9 bzw. 10) mit dem Auslaß (15) in Verbindung steht.

17. Werkzeuganordnung nach einem der vorhergehenden Ansprüche,
**dadurch gekennzeichnet, dass**
der Antrieb (3) über eine Fernbedienung (18) betätigbar bzw. steuerbar ist.

18. Verwendung der Werkzeuganordnung nach einem der vorhergehenden Ansprüche 1 bis 17 für Tätigkeiten, z. B. Zerkleinerungen, Zerschneidungen oder dergleichen unter Wasser, z. B. in einem Kernreaktor.

## Claims

1. Tool arrangement comprising a tool unit (2), e.g. a cutting implement (2'), a spreader (2"), a crushing device or the like, a drive (3), a control and/or changeover element, and a first operating-medium circuit (4), a second operating-medium circuit (5) being provided which is in operative connection with the first operating-medium circuit (4) via a pressure-media converter (6), **characterized in that** the pressure-media converter (6) has two cylinders (7, 8), in which a respective free piston (9, 10), which separates the two operating media from one another, is movable with a reciprocating stroke, and a piston status indicator (17) is provided for at least one free piston (9, 10).

2. Tool arrangement according to Claim 1, **characterized in that** the first operating-medium circuit (4) is connected to the drive (3) and the second operating-medium circuit (5) is connected to the tool unit (2).

3. Tool arrangement according to either of Claims 1 and 2, **characterized in that** the first operating-medium circuit (4) is operated with a first operating medium and the second operating-medium circuit (5) is operated with a second operating medium, the first and the second operating media differing from one another.

4. Tool arrangement according to Claim 3, **characterized in that** the first and the second operating media are in each case liquids.

5. Tool arrangement according to one of the preceding claims, **characterized in that** the second operating medium is water, in particular de-ionized water.

6. Tool arrangement according to one of the preceding claims, **characterized in that** the first operating medium is a conventional hydraulic medium, in particular hydraulic oil or HFC fluid.

7. Tool arrangement according to one of the preceding claims, **characterized in that** the two cylinders (7, 8) are arranged parallel to one another.

8. Tool arrangement according to one of the preceding claims, **characterized in that** the respective free pistons (9, 10) have at least two spaced-apart sealing elements (11, 12).

9. Tool arrangement according to Claim 8, **characterized in that** at least one sealing element (11, 12) is arranged in the end region of the respective free piston (9 or 10).

10. Tool arrangement according to one of the preceding claims, **characterized in that** the free pistons (9, 10) each have at least one recess (13) which is arranged between the sealing elements (11, 12).

11. Tool arrangement according to Claim 10, **characterized in that** the recess (13) is open towards the cylinder shell (14).

12. Tool arrangement according to either of Claims 10 and 11, **characterized in that** the recess (13) extends over the entire circumference of the respective free piston (9, 10).

13. Tool arrangement according to one of Claims 10 to 12, **characterized in that** the recess (13) is of concave design.

14. Tool arrangement according to one of the preceding claims, **characterized in that** the cylinders (7, 8) each have at least one outlet (15).

15. Tool arrangement according to one of Claims 10 to 14, **characterized in that** at least one outlet (15) in the cylinder (7 or 8) is assigned to the recess (13).

16. Tool arrangement according to one of Claims 10 to 15, **characterized in that** the recess (13) is connected to the outlet (15) during the reciprocating movement of the free piston (9 or 10).

17. Tool arrangement according to one of the preceding claims, **characterized in that** the drive (3) can be actuated or controlled via a remote control (18).

18. Use of the tool arrangement according to one of the preceding Claims 1 to 17 for activities, e.g. comminution, cutting-up or the like, under water, e.g. in a nuclear reactor.

## Revendications

1. Agencement d'outil comprenant une première unité d'outil (2), par exemple un appareil de coupe (2'), un écarteur (2"), un dispositif d'écrasement ou analogue, un entraînement (3), un élément de commande et/ou de commutation, ainsi qu'un premier circuit de fluide de fonctionnement (4), où un deuxième circuit de fluide de fonctionnement (5) est prévu, relié fonctionnement au premier circuit de fluide de fonctionnement (7) par un convertisseur de fluide sous pression (6),
**caractérisé en ce que**
le convertisseur de fluide sous pression (6) présente deux cylindres (7, 8), dans chacun desquels un piston libre (9, 10), qui sépare l'un de l'autre les deux fluides de fonctionnement, est susceptible d'être déplacé dans un sens et dans l'autre de la valeur d'une course et un indicateur de position de piston (17) est prévu pour au moins un piston libre (9, 10).

2. Agencement d'outil selon la revendication 1,
**caractérisé en ce que**
le premier circuit de fluide de fonctionnement (4) est relié à l'entraînement (3) et le deuxième circuit de fluide de fonctionnement (5) est relié à l'unité d'outil (2).

3. Agencement d'outil selon l'une des revendications 1 ou 2,
**caractérisé en ce que**
le premier circuit de fluide de fonctionnement (4) fonctionne avec un premier fluide de fonctionnement et le deuxième circuit de fluide de fonctionnement (5) fonctionne avec un deuxième fluide de fonctionnement, sachant que le premier et le deuxième fluides de fonctionnement sont différents l'un de l'autre.

4. Agencement d'outil selon la revendication 3,
**caractérisé en ce que**
le premier et le deuxième fluides de fonctionnement sont chacun des liquides.

5. Agencement d'outil selon l'une des revendications précédentes,
**caractérisé en ce que**
le deuxième fluide de fonctionnement est de l'eau, en particulier de l'eau déionisée (déionat).

6. Agencement d'outil selon l'une des revendications précédentes,
**caractérisé en ce que**
le premier fluide de fonctionnement est un fluide hydraulique classique, en particulier de l'huile hydraulique, ou un fluide HFC.

7. Agencement d'outil selon l'une des revendications précédentes,
**caractérisé en ce que**
les deux cylindres (7, 8) sont disposés parallèlement entre eux.

8. Agencement d'outil selon l'une des revendications précédentes,
**caractérisé en ce que**
le piston libre (9, 10) respectif présente au moins deux éléments d'étanchéité (11, 12) espacés l'un de l'autre.

9. Agencement d'outil selon la revendication 8,
**caractérisé en ce que**
au moins un élément d'étanchéité (11, 12) est disposé chaque fois dans la zone d'extrémité du piston libre (9 ou 10).

10. Agencement d'outil selon l'une des revendications précédentes,
**caractérisé en ce que**
les pistons libres (9, 10) présentent chacun au moins un évidement (13) disposé entre les éléments d'étanchéité (11, 12).

11. Agencement d'outil selon la revendication 10,
**caractérisé en ce que**
l'évidement (13) est ouvert en direction de l'enveloppe de cylindre (14).

12. Agencement d'outil selon l'une des revendications 10 ou 11,
**caractérisé en ce que**
l'évidement (13) s'étend sur l'ensemble de la circonférence du piston libre (9, 10) respectif.

13. Agencement d'outil selon l'une des revendications 10 à 12,
**caractérisé en ce que**
l'évidement (13) est concave.

14. Agencement d'outil selon l'une des revendications précédentes,
**caractérisé en ce que**
les cylindres (7, 8) présentent chacun un échappement (15).

15. Agencement d'outil selon l'une des revendications 10 à 14,
**caractérisé en ce que**
à l'évidement (13) est associé au moins un échappement (15) dans le cylindre (7 ou 8).

16. Agencement d'outil selon l'une des revendications 10 à 15,
**caractérisé en ce que**
l'évidement (13) est relié à l'échappement (15), pendant le déplacement dans un sens et dans l'autre du piston libre (9 ou 10).

17. Agencement d'outil selon l'une des revendications précédentes,
**caractérisé en ce que**
l'entraînement (3) est susceptible d'être actionné ou commandé par l'intermédiaire d'une télécommande (18).

18. Utilisation de l'agencement d'outil selon l'une des revendications 1 à 17 précédentes, pour des activités, par exemple des broyages, des découpages ou analogues, sous l'eau, par exemple dans un réacteur nucléaire.
